# EUROPÄISCHE PATENTSCHRIFT

(11) **EP 1 175 557 B1**
(45) Veröffentlichungstag und Bekanntmachung des Hinweises auf die Patenterteilung: **14.09.2005**
(21) Anmeldenummer: 00926714.7
(22) Anmeldetag: 05.04.2000
(51) Int. Cl.: F02D 41/26, G06F 11/00

(54) **VERFAHREN UND VORRICHTUNG ZUR ÜBERWACHUNG EINES RECHENELEMENTS IN EINEM KRAFTFAHRZEUG**
METHOD AND DEVICE FOR MONITORING A COMPUTING ELEMENT IN A MOTOR VEHICLE
PROCEDE ET DISPOSITIF POUR LE CONTROLE D'UN CALCULATEUR DANS UN VEHICULE

(30) Priorität: 16.04.1999 DE 19917208
(43) Veröffentlichungstag der Anmeldung: 30.01.2002
(73) Patentinhaber: ROBERT BOSCH GMBH, 70442 Stuttgart (DE)
(72) Erfinder: BEDERNA, Frank, I-40056 Crespellano (IT)
(86) Internationale Anmeldenummer: PCT/DE2000/001099
(87) Internationale Veröffentlichungsnummer: WO 2000/063546

(56) Entgegenhaltungen:
- WO-A-96/13657
- DE-A- 19 609 242
- DE-A- 19 653 429
- US-A- 5 043 984

## Beschreibung

### Stand der Technik

Die Erfindung betrifft ein Verfahren und eine Vorrichtung zur Überwachung eines Rechenelements in einem Kraftfahrzeug, gemäß dem Oberbegriff der Ansprüche 1 und 10.

Aus der DE-A 44 38 714 ist ein Verfahren und eine Vorrichtung zur Überwachung eines Rechenelements in einem Kraftfahrzeug bekannt, dessen Programmstruktur wenigstens drei Ebenen aufweist. Einer ersten Ebene sind die Programme zugeordnet, welche die Steuerungsfunktion, z.B. die Steuerung der Leistung einer Antriebseinheit, durchführen. Einer zweiten Ebene sind Programme zugeordnet, welche zur Überwachung der Funktion der ersten Ebene dienen. Dazu wird im gezeigten Ausführungsbeispiel einer Leistungssteuerung für eine Antriebseinheit ein zulässiger Wert für eine einzustellende Betriebsgröße mit einem gemessenen oder ermittelten Istwert dieser Größe verglichen. Einer dritten Ebene sind Programme oder Programmteile zugeordnet, die zur Ablaufkontrolle der der zweiten Ebene zugeordneten Überwachungsprogramme dienen. Die Ablaufkontrolle erfolgt dabei im Rahmen einer Frage-Antwort-Kommunikation mit einem Sicherheitsbaustein (Überwachungsmodul), welcher die korrekte Abarbeitung der Programme der zweiten Ebene anhand der Ergebnisse der Frage-Antwort-Kommunikation überprüft (Ablaufkontrolle) . Wird durch die Programme der zweiten Ebene und/oder durch das Überwachungsmodul wenigstens ein Fehlerzustand erkannt, werden Fehlerreaktionsmaßnahmen eingeleitet, die im Beispiel der Steuerung einer Antriebseinheit in der Abschaltung der Betriebsmittelzufuhr oder anderen, betriebseinschränkenden Maßnahmen bestehen.

Zur Verbesserung der Überwachung der Funktionsfähigkeit der Programme der zweiten Ebene, ist gemäß der DE-A 196 09 242 vorgesehen, neben oder alternativ zur Ablaufkontrolle einen Befehlstest durchzuführen, in dessen Rahmen ausgewählte Programme oder Programmteile mit vorgegebenen Testdaten gerechnet werden und das oder die Berechnungsergebnisse im Überwachungsmodul bitgenau zur Fehlererkennung überprüft werden.

Wesentlich bei den bekannten Lösungen ist, daß die Programme der ersten und zweiten Ebene sowie die Ablaufkontrolle und der Befehlstest in einem einzigen Rechenelement durchgeführt werden. Die Überwachung durchführenden Programme der zweiten Ebene sollten dabei aus mit Eingangssignalen arbeiten, die zu den von den Programmen der ersten Ebene verarbeitenden Eingangssignalen redundant sind. Diese Maßregel führt zur Verdoppelung der Sensorik, wobei zur Vermeidung des Einsatzes zusätzlicher Sensoren aufgrund der unterschiedlichen Sensorumfänge in unterschiedlichen Fahrzeugen nur eine kleine Schnittmenge der Eingangssignale zur Überwachung zur Verfügung steht. Ferner wird mit zunehmenden Funktionsumfang, insbesondere mit zunehmendem Funktionsumfang leistungsbestimmender Funktionen einer Antriebseinheit wie z.B. bei Steuersystemen für Motoren mit Benzindirekteinspritzung, die Güte der Überwachung immer schlechter. Ein Beispiel für eine Funktion, welche die Güte der Überwachung beeinträchtigen kann, ist das Lernen der Anschläge des Fahrpedalstellungsgebers. Wird durch diese Lernfunktion z.B. der Offset des Fahrpedalstellungssignals verändert, ist dies bei der Überwachung durch die Berücksichtigung maximaler Toleranzen der Endanschläge zu berücksichtigen. Dieser relativ große Toleranzbereich kann zu einer Beeinträchtigung der Überwachungsgüte führen.

Es ist Aufgabe der Erfindung, eine Überwachung für ein Rechenelement in einem Fahrzeug anzugeben, bei welchem trotz zunehmendem Funktionsumfang eine ausreichend zufriedenstellende Güte der Überwachung sichergestellt ist.

Dies wird durch kennzeichnenden Merkmale der unabhängigen Patentansprüche erreicht.

### Vorteile der Erfindung

Es wird eine Überwachung für ein Rechenelement in einem Kraftfahrzeug angegeben, durch welche auch bei steigendem Funktionsumfang und unterschiedlichen Sensorumfängen in einzelnen Fahrzeugen eine zufriedenstellende Überwachung der Funktionsweise des Rechenelements sichergestellt ist.

Von besonderem Vorteil ist, daß eine zusätzliche Überwachungsebene eingespart werden kann, ohne daß auf Sicherheitsstandards verzichtet werden muß.

In diesem Zusammenhang ist von besonderem Vorteil, daß sich die Entwicklungsabläufe für die Überwachung des Rechenelements vereinfachen, da jede neue sicherheitsrelevante Funktion keine dazu passende neue Überwachungsfunktion benötigt. Deren Entwicklung wird somit eingespart.

Von besonderem Vorteil ist die Vorgehensweise in Verbindung mit der Steuerung einer Antriebseinheit, bei welcher eine Vielzahl leistungsbestimmender Funktionen vorgesehen sind.

Besonders vorteilhaft ist ferner, daß adaptierende Funktionen, welche leistungsbestimmende Funktionen beeinflussen, keinen Einfluß auf die Güte der Überwachungsfunktion haben.

Besonders vorteilhaft ist die Auswahl vorgegebener Rechenschritte aus den Funktionsprogrammen zur Durchführung eines Befehlstestes, da dadurch die Rechenleistung reduziert werden kann, ohne daß auf Sicherheitsstandards verzichtet werden muß.

Besonders vorteilhaft ist, daß neben der beschriebenen Vorgehensweise zusätzlich eine aus dem Stand der Technik bekannte Überwachung vorgesehen ist, welche im Rahmen einer zweiten Ebene im Rechenelement arbeitet.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsblockschaltbild einer Steuereinheit mit einem Rechenelement, welche wenigstens eine Betriebsgröße im Kraftfahrzeug steuert, vorzugsweise die Leistung einer Antriebseinheit. In Figur 2 ist anhand eines Ablaufdiagramms ein Beispiel für die Überwachung der Funktionsweise des Rechenelements dargestellt. Figur 3 zeigt Ablaufdiagramme für zwei Realisierungen der Befehlstestebene.

### Beschreibung von Ausführungsbeispielen

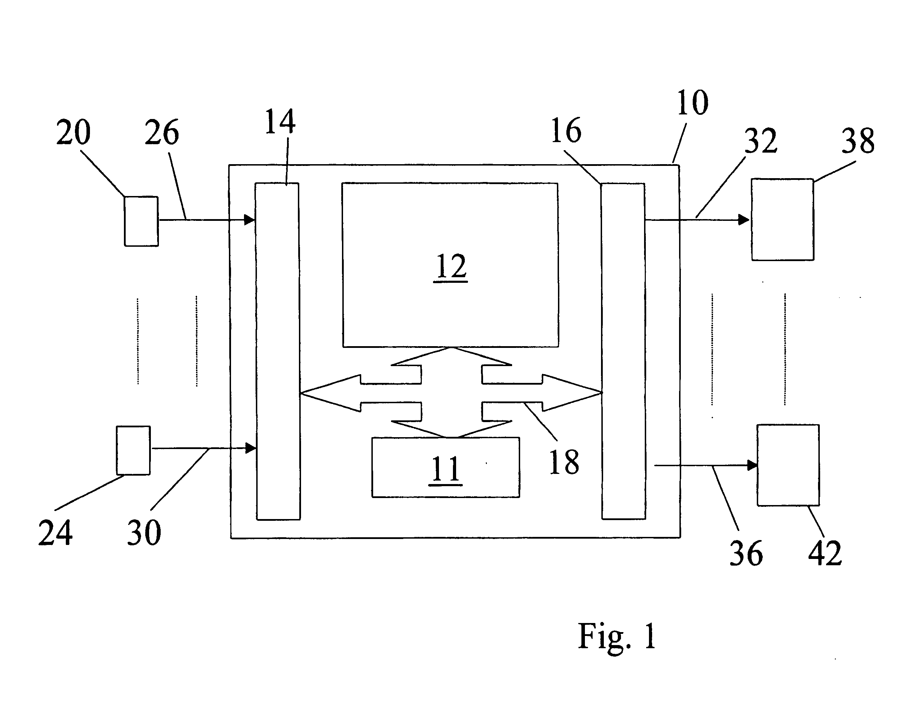

Figur 1 zeigt ein elektronisches Steuergerät 10, welches wenigstens ein Rechenelement 12, ein Überwachungsmodul 11, eine Eingangsschaltung 14 und eine Ausgangsschaltung 16 umfaßt. Speicherbausteine sind Teil des Rechenelements 12 oder diesem zugeordnet. Die genannten Elemente sind über ein Kommunikationssystem 18 miteinander zum Datenaustausch verbunden. Der Eingangsschaltung 14 werden Signale zugeführt, welche gemessene Betriebsgrößen der Antriebseinheit, des Triebstrangs und/oder des Kraftfahrzeuges repräsentieren oder aus welchen solche Betriebsgrößen abgeleitet werden können. Diese Signale werden von Meßeinrichtungen 20 bis 24 erfaßt und über Eingangsleitungen 26 bis 30 der Eingangsschaltung 14 zugeführt. Ferner werden über die Ausgangsschaltung 16 Signale ausgegeben, welche Stellelemente zur Einstellung wenigstens einer Betriebsgröße der Antriebseinheit, des Triebstranges und/oder des Kraftfahrzeuges betätigen. Die entsprechenden Ansteuersignalgrößen werden über die Leitungen 32 bis 36 an die Stellelemente 38 bis 42 abgegeben.

In Abhängigkeit der Eingangssignale, daraus abgeleiteter Betriebsgrößen und/oder interner Größen bildet das Rechenelement 12 im Rahmen dort implementierter Programme Werte für die auszugebenden Steuergrößen, die die Stellelemente im Sinne einer vorgegebenen Steuerstrategie einstellen. Im bevorzugten Ausführungsbeispiel handelt es sich bei der Steuereinheit 10 um eine Steuereinheit zur Steuerung einer Antriebseinheit eines Kraftfahrzeuges. Dort wird in bekannter Weise die Stellung eines vom Fahrer betätigbaren Bedienelements erfaßt, ausgewertet und ein Sollwert für ein Drehmoment der Antriebseinheit ermittelt. Dieses wird dann unter Berücksichtigung von über die Eingangsschaltung 14 empfangenen Sollwerten anderer Steuersysteme, wie beispielsweise einer Antriebsschlupfregelung, einer Getriebesteuerung, etc. sowie intern gebildeter Sollwerte (Begrenzungen, etc.), ein Sollwert für das Drehmoment ermittelt. Dieser wird dann im bevorzugten Ausführungsbeispiel einer Brennkraftmaschine in einen Sollwert für die Stellung der Drosselklappe, der im Rahmen eines Lageregelkreises eingestellt wird, umgewandelt. Ferner sind je nach Ausstattung der Brennkraftmaschine weitere leistungsbestimmende Funktionen vorgesehen, beispielsweise die Steuerung eines Turboladers, einer Abgasrückführung, einer Leerlaufdrehzahlregelung, etc. Darüber hinaus sind bei Brennkraftmaschinen mit Benzindirekteinspritzung nicht nur die Lufteinstellung, sondern auch die Bestimmung der einzuspritzenden Kraftstoffmasse, die Bestimmung eines einzustellenden Luft/Kraftstoffverhältnisses, die Vorgabe des Einspritzverlaufes (Voreinspritzung, Nacheinspritzung), die Steuerung einer Ladungsbewegungsklappe, etc. leistungsbestimmend, so daß dort neben den geschilderten eine Vielzahl weiterer Programme vorzusehen sind, die Einfluß auf die Leistung der Brennkraftmaschine und somit auf die Sicherheit des Kraftfahrzeuges haben.

In einem anderen Ausführungsbeispiel steuert die Steuereinheit 10 ein automatisches Getriebe oder eine Bremsanlage, z.B. eine Bremsanlage mit elektromotorischer Zuspannung. Auch bei diesen Systemen sind Programme, welche für das Kraftfahrzeug sicherheitsrelevant sind, beispielsweise bei der Steuerung einer Bremsanlage die Bildung der Sollbremskraft, die Einregelung der Sollbremskraft an den einzelnen Radbremsen, die Bildung des Fahrerbremswunsches aus den Betätigungssignalen des Bremspedals, etc.. Entsprechende sicherheitsrelevante Funktionen sind auch bei Getriebesteuerung vorhanden.

Bei derartigen Steuersystemen sind grundsätzliche zwei mögliche Fehlerfelder zu beachten. Zum einen sind dies Definitions- und Softwarefehler bei der Umsetzung in die Steuersoftware, zum anderen sind dies Hardwarefehler im Rechenelement, die beim Betrieb des Steuergerätes auftreten können. Durch die eingangs genannten Überwachungskonzepte werden beide Fehlerfelder abgedeckt. Das nachfolgend beschriebene Überwachungskonzept geht von einer Aufspaltung der Behandlung dieser beiden Fehlerfelder aus, wobei lediglich Hardwarefehler im Rechenelement überwacht werden. Dies erlaubt, einen Befehlstest über die sicherheitsrelevanten Funktionen durchzuführen, ggf. zusätzlich zu einer Ablaufkontrolle. Die der Ebene 2 und 3 zugeordneten Programme können demnach entfallen, da die Überwachung über die in der Ebene 1 bestehenden sicherheitsrelevanten Funktionen durchgeführt wird (Ebene 1'). Neben dem Befehlstest und ggf. einer Ablaufkontrolle sind Speichertests vorgesehen, welche die Funktionsfähigkeit der Speicher des Rechenelementes sicherstellen.

Die durch die nachfolgend geschilderte Überwachung nicht erfaßten System- und Softwarefehler sind durch geeignete Maßnahmen in der Entwicklungsphase zu ermitteln und zu vermeiden, beispielsweise durch die Entwicklung der sicherheitsrelevanten Funktionen und Komponenten durch mehrere Mitarbeiter mit gegenseitiger Überprüfung der Arbeitsergebnisse. Ferner werden diese Art von Fehlern durch Vergleich des Entwicklungsergebnisses mit einem Simulationsmodell erkannt und die Fehlerfreiheit der Software auf diese Weise verifiziert.

Für die Überwachung im Rechenelement bleiben so lediglich Hardwarefehler übrig, so daß es ausreicht, nur die sicherheitsrelevanten Funktionen, bei der Steuerung von Antriebseinheiten die leistungsbestimmenden Funktionspfade und damit die leistungsbestimmenden Module im Rechner zu prüfen. Die Prüfung dieser Funktionen bzw. Programmodule erfolgt durch einen Befehlstest und ggf. einer Ablaufkontrolle. Bei Befehlstest werden vom Überwachungsmodul 11 ausgewählten Testdaten für ausgewählte Module vorgegeben. Die von den Modulen durchgeführten Testrechnungen werden zu einer Antwort zusammengefaßt und dem Überwachungsmodul 11 übergeben. Dort erfolgt die Überprüfung bitgenau mit den jeweiligen Testdaten zugeordneten Ergebnisdaten. Stimmen die im Befehlstest errechneten Ergebnissen mit den erwarteten nicht überein, erfolgt eine Fehlerreaktion, die beispielsweise durch das Überwachungsmodul, welches als separater Baustein ausgebildet ist, erfolgt. Die Speicherbausteine (RAM, ROM) der Steuereinheit und/oder der Rechenelements werden unabhängig von der Funktionsüberprüfung getestet.

Die Realisierung dieser Überwachungsmaßnahme erfolgt dadurch, daß einzelne sicherheitsrelevante Module und/oder Rechenschritte der sicherheitsrelevanten Module ausgewählt werden und als Kopie oder im Rahmen einer zeitweisen Umschaltung der Ebene 1' zugeordnet werden. In einem nicht erfindungsgemäßen Beispiel wird die Kopie in einem eigenen Speicherbaustein abgelegt. Vorteilhaft ist, da eine Reduzierung der Rechnerbelastung erfolgt, wenn nur Teile der Module der Funktionsebene kopiert werden bzw. für den Befehlstest herangezogen werden, insbesondere wenn lediglich einzelne Programmschritte, wie Additionen, Subtraktionen, etc. aus den einzelnen sicherheitsrelevanten Programmodulen ausgewählt werden, was jedoch nicht erfindungsgemäß ist, und im Rahmen des Befehlstests gerechnet werden.

Die Testrechnungen des Befehlstest werden nur wenig seltener, vorzugsweise entsprechend häufig wie die Funktionsrechnungen durchgeführt. Eine maximale Fehlerreaktionszeit ist dadurch gewährleistet, da eine Fehlererkennung im Befehlstest mit einer vorhandenen Fehlfunktion des gesamten Systems gleichzusetzen ist.

Zusätzlich sind die sicherheitsrelevanten Funktionen in der Ebene 1 mit einer Programmablaufkontrolle bekannter Art ausgestattet. Im Rahmen dieser Programmablaufkontrolle werden vom Überwachungsmodul per Zufallsgenerator ausgewählte Fragen gestellt, durch ausgewählte Programmodule oder Programmschritte der Ebene 1 beantwortet und das zusammengeführte Ergebnis zum Überwachungsmodul übertragen. Dieses vergleicht das Ergebnis mit einer der Frage zugeordneten Normantwort. Bei Abbrechungen wird ein Fehler erkannt.

Im bevorzugten Ausführungsbeispiel der Steuerung einer Antriebseinheit sind sicherheitsrelevante Module zur Auswertung der Fahrpedalstellungssignale, Module zur Überwachung des Drosselklappenstellers, Module zur Durchführung des Analog-Digital-Wandlertests, Module, die die Sollmomenten-Koordination durchführen, Module, die die Leerlaufregelung durchführen, Module für die Lageregelung einer Drosselklappe, etc.

Neben Befehlstest und Programmablaufkontrolle wird einem vorteilhaften Ausführungsbeispiel eine schnelle Überprüfung der Speicherbausteine zumindest bezüglich der sicherheitsrelevanten Module durchgeführt. Der Speichertest wird dabei in kurzen Zeitabständen durchgeführt. Als Beispiel für eine geeignete Überprüfung der Speicherbausteine sei ein doppeltes Ablegen der RAM-Information mit Komplement oder ein geeigneter Test des Speicherbausteines über die relevanten Zellen zu nennen. Entsprechend wird beim ROM der Steuereinheit 10 vorgegangen.

Die beschriebene Überwachungsmaßnahme stellt den korrekten Betrieb des Rechenelements sicher und erkennt zuverlässig Hardwarefehler im Bereich des Rechenelements. Eine weitere Verbesserung der Überwachungsgüte wird durch eine zusätzliche Programmablaufkontrolle erreicht, welche durch die weiterhin zusätzliche Überprüfung der Speicherbausteine zusammen mit der Überwachungsfunktion zu einer insgesamt zuverlässigen und zufriedenstellenden Überwachung des Rechenelements führt.

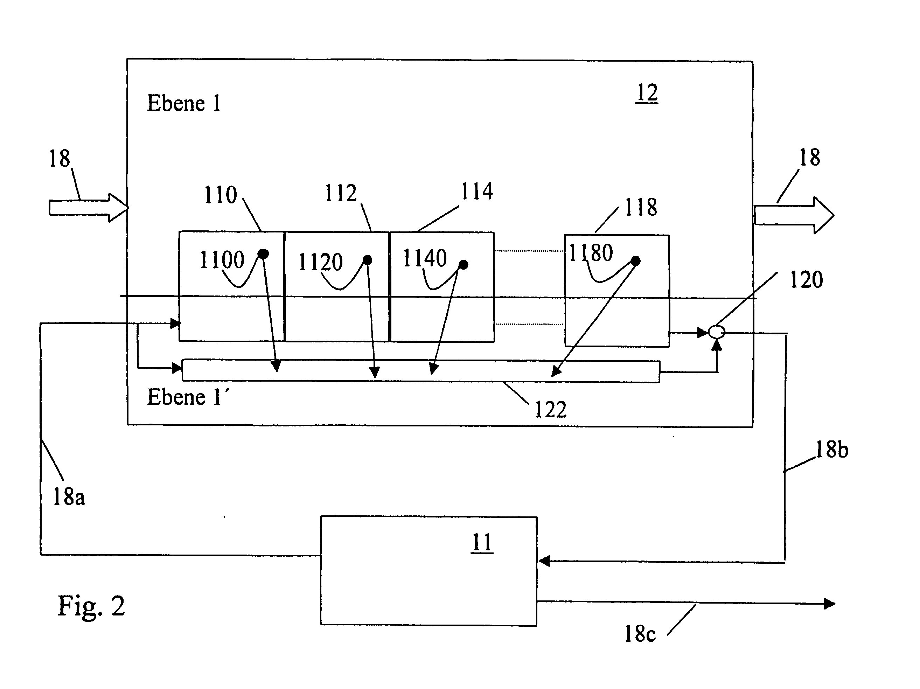

Ein bevorzugtes Ausführungsbeispiel am Beispiel der Steuerung einer Brennkraftmaschine ist anhand des Ablaufdiagramms nach Figur 2 skizziert.

Figur 2 zeigt eine schematische Darstellung des Rechenelementes 12 sowie des separaten Überwachungsmoduls 11. Die sicherheitsrelevanten Funktionen bzw. Programmodule sind mit 110, 112 und 114 bis 118 bezeichnet. Dem Rechenelement werden Größen über das Kommunikationssystem 18 zugeführt, aus denen in nicht dargestellten Programmodulen zur die von den sicherheitsrelevanten, d.h. den leistungsbestimmenden Programmodulen verwendeten Größen ermittelt werden. Ferner werden über das Kommunikationssystem 18 vom Rechenelement Steuersignale zur Steuerung der Stellelemente ausgegeben, die von wenigstens einem der Programmodule 110 bis 118 ermittelt wurden. Nicht dargestellt sind auch hier notwendige Zwischenschritte und Zwischenberechnungen, die in nicht dargestellten Programmodulen in Verbindung mit der Bildung der Steuersignale durchgeführt werden.

Im bevorzugten Ausführungsbeispiel einer Steuerung einer Brennkraftmaschine stellt sind die ausgewählten Programmodule 110 bis 118 Programme, die die Leistung der Brennkraftmaschine bestimmen. Z.B. wird mit dem Programmodul 110 die Fahrpedalstellung erfaßt und der Fahrerwunsch gebildet, mit dem Programmodul 112 die Momentenkoordination, mit dem Programmodul 114 die Leerlaufregelung und mit dem Programmodul 118 die Lageregelung der Drosselklappe durchgeführt. Letzteres gibt dann ein leistungsbestimmendes Steuersignal auf der Basis der Zwischenergebnisse der anderen Module ab. Daneben sind andere, nicht dargestellte sicherheitsrelevante Programmodule vorhanden, z.B. der Test des Analog/Digitalwandlers, der Überwachung des Drosselklappenstellelements, die Auswertung der Drosselklappenstellungssignale, etc., die aus Übersichtsgründen in Figur 2 nicht dargestellt sind.

Figur 2 zeigt ein ferner die vorstehend beschriebene Vorgehensweise zur Überwachung des Rechenelements 12 und das Zusammenspiel mit dem Überwachungsmodul 11. Dargestellt sind die im Rechenelement 12 vorhandenen 2 Programmebenen, die Ebene 1, der die die Steuerungsfunktion durchführenden Programme (z.B. 110 bis 118) zugeordnet sind, sowie die Ebene 1', der die Programme 110 bis 118, Teile davon oder Kopien davon zugeordnet sind, die der Durchführung der Überwachungsfunktion zugrunde liegen. Über das Kommunikationssystem 18 steht das Rechenelement 12 mit dem Überwachungsmodul 11 in Verbindung, was in Figur 2 durch die Leitungen 18a und 18b dargestellt ist. Ferner greift das Überwachungsmodul 11 über das Kommunikationssystem 18, symbolisiert durch die Leitung 18c, im Falle eines Fehlers auf die Steuerung im Sinne eines Notlaufes oder einer Begrenzung der Steuerungsfunktionen ein.

Die dargestellten Programme 110 bis 118 wirken sich sicherheitsrelevant auf das Betriebsverhalten des Kraftfahrzeuges aus, da sie die Leistung der Antriebseinheit unabhängig von der Fahrervorgabe beeinflussen. Die dargestellten Programme sind als Funktionsprogramme der Ebene 1 zugeordnet und werden dort zur Durchführung der Steuerung abgearbeitet. Mittels dieser Programme wird eine wie aus dem Stand der Technik bekannte Ablaufkontrolle durchgeführt, welche als Frage-Antwort-Kommunikation mit dem Überwachungsmodul 11 von diesem über die Leitung 18a angestoßen wird. Aus diesem Grunde sind die Programme 110 und 118 auch Teil der Überwachungsebene 1' des Rechenelements 12. Die gesammelte Antwort, an der alle ausgewählten Programmodule mitwirkten, auf die Frage des Überwachungsmoduls 11 wird über die Verknüpfungsstelle 120, in der das Ergebnis der Ablaufkontrolle mit dem Ergebnis des Befehlstestes über die ausgewählten Programme verknüpft werden kann, dem Überwachungsmodul 11 über die Leitung 18b zugeführt. Das Überwachungsmodul 11 überprüft das übermittelte Ergebnis mit einem vorgegebenen Wert auf Richtigkeit und leitet bei unzulässigen Abweichungen Fehlerreaktionsmaßnahmen ein (über die Leitung 18c).

Der Befehlstest 122 findet wie aus dem eingangs genannten Stand der Technik bekannt auf der Basis von vorgegebenen Testdaten statt. Vorzugsweise mehrere Testdatensätze sind im Speicher des Rechenelements 12 abgelegt und werden von dem Überwachungsmodul 11 über einen entsprechenden Befehl ausgewählt. Der Befehlstest findet über ausgewählte Programme, die sicherheitsrelevanten Einfluß haben, die insbesondere leistungsbestimmend sind, statt. Im gezeigten Beispiel sind dies die Programme 110 bis 118. Je nach Ausführungsbeispiel sind die gesamten Programme im Befehlstest 122 integriert, wobei bezüglich des Befehlstestes das komplette Programm mit Testdaten durchlaufen wird, oder, wie in Figur 2 gezeigt, ausgewählte Programmteile oder Programmschritte 1100 bis 1180. Beispielsweise werden aus jedem Programm bestimmte Programmschritte, z.B. Additions-, Subtraktions-, oder Multiplikationsschritte, ausgewählt. Die ausgewählten Programmschritte oder -teile werden in den Befehlstest 122 kopiert oder verbleiben im Originalprogramm und werden dann (entweder in der Kopie oder im Original) zum Befehlstest mit Testdaten durchlaufen. Das Ergebnis wird über die Verknüpfungsstelle 120 und die Leitung 18b an das Überwachungsmodul 11 gesendet. Neben Befehlstest und Ablaufkontrolle findet der oben dargestellte Speichertest statt.

Anstelle einer Kopie des Originalprogramms oder Teilen davon wird in einem anderen Ausführungsbeispiel das Originalprogramm selbst zur Testrechnung verwendet. Die notwendige Umschaltung ist Teil der Ebene 1'.

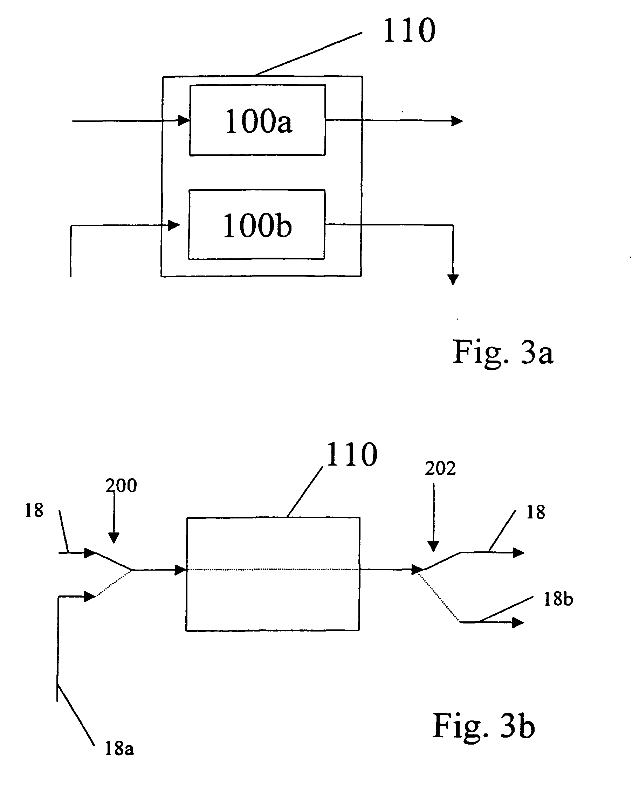

In Figur 3 sind zwei konkrete Realisierungsmöglichkeiten am Beispiel des Programmes 110 dargestellt. Gemäß Figur 3a wird das Programm 110 als solches oder einzelne Programmschritte daraus kopiert, wobei die Kopie 110b dem Befehlstest zugrunde gelegt wird. Das Originalprogramm 110a, welches die Funktion durchführt, bleibt unbeeinflußt.

Im Ausführungsbeispiel nach Figur 3b ist das Programm 110 nur einmal als Original vorhanden. Beim Auftreten der Bedingungen (vorzugsweise Zeitbedingung) für den Befehlstest werden die Schaltelemente 200 und 202 in die gestrichelte Stellung umgeschaltet. Das Programm 110 wird dann anstelle der zugeführten Originaldaten (18) mit den Testdaten (18a) durchlaufen und das Ergebnis an das Überwachungsmodul 11 zur Kontrolle abgegeben (18b). Neben dem vollständigen des Programms 110 zum Befehlstest werden Programmteile bzw. Programmschritte des Originalprogramms 110 als Basis des Befehlstestes ausgewählt.

## Patentansprüche

1. Verfahren zur Überwachung eines Rechenelements (12) in einem Fahrzeug, welches Programmodule (110 - 118) umfaßt, mit deren Hilfe das Betriebsverhalten des Kraftfahrzeuges beeinflußt wird, wobei das Rechenelement mit Hilfe der Programmodule abhängig von wenigstens einer Eingangsgröße wenigstens eine Ausgangsgröße zur Steuerung wenigstens einer Funktion im Kraftfahrzeug erzeugt, **dadurch gekennzeichnet, daß** zur Überwachung der korrekten Funktion des Rechenelements (12) wenigstens ein Programmodul mit mehreren Programmschritten ausgewählt wird, dieses wenigstens eine ausgewählte Modul im Rechenelement (12) auf der Basis von Testdaten durchlaufen und das Ergebnis der Testdatenrechnung mit einem vorgegebenen Ergebnis zur Fehlererkennung verglichen wird und dass das ausgewahlte Prögrammmodul von zügeführten Originaldaten und den Testdaten durchlaufen wird, wobei Zeitweise Zwischen der Zuführ der Originaldaten und der Testdaten umgeschaltet wird.

2. Verfahren nach Anspruch 1 **dadurch gekennzeichnet, daß** der Test von einem Überwachungsmodul angeregt wird.

3. Verfahren nach einem der vorhergehenden Ansprüche, **dadurch gekennzeichnet, daß** neben dem Test eine Ablaufkontrolle des wenigstens einem ausgewählten Programmoduls vorgesehen ist, die eine Frage-Antwort-Kommunikation mit dem Überwachungsmodul darstellt und von diesem gestartet wird.

4. Verfahren nach einem der vorhergehenden Ansprüche, **dadurch gekennzeichnet, daß** das durch den Test und/oder durch die Ablaufkontrolle ermittelte Ergebnis im Überwachungsmodul mit einem jeweils vorgegebenen Ergebnis verglichen wird und bei unzulässigen Abweichungen eine Fehlerreaktion durch das Überwachungsmodul eingeleitet wird.

5. Verfahren nach einem der vorhergehenden Ansprüche, **dadurch gekennzeichnet, daß** das Rechenelement zur Steuerung zur Antriebseinheit eines Kraftfahrzeuges dient, und das wenigstens eine ausgewähltes Programmodul sicherheitsrelevant, vorzugsweise leistungsbestimmend, ist, wie zum Beispiel die Erfassung des Fahrerwunsches, die Leerlaufregelung, die Momentenkoordination, die Drosselklappenlageregelung.

6. Verfahren nach einem der vorhergehenden Ansprüche, **dadurch gekennzeichnet, daß** das wenigstens eine ausgewählte Programmodul als Originalprogramm einer ersten Ebene des Rechenelementes (Ebene 1) und im Original zur Durchführung des Tests einer zweiten Ebene des Rechenelements (Ebene 1') zugeordnet wird.

7. Verfahren nach einem der vorhergehenden Ansprüche, **dadurch gekennzeichnet, daß** das wenigstens eine ausgewählte Programmodule als Originalprogramm zum Test herangezogen wird.

8. Verfahren nach einem der vorhergehenden Ansprüche, **dadurch gekennzeichnet, daß** neben einem Befehlstest, der eine Testrechnung mit dem Originalprogramm darstellt, und/oder einer Ablaufkontrolle ein Test wenigstens der sicherheitsrelevanten Speicherzellen des Rechenelements (12) durchgeführt wird.

9. Verfahren nach einem der vorhergehenden Ansprüche, **dadurch gekennzeichnet, daß** das Rechenelement zur Steuerung eines automatischen Getriebes oder einer Motorleistungssteuerung oder einer elektrisch gesteuerten Bremsanlage, vorzugsweise einer Bremsanlage mit elektromotorischer Zuspannung, dient.

10. Vorrichtung zur Überwachung eines Rechenelementes (12) in einem Kraftfahrzeug, mit einem Rechenelement (12), welches Programmodule (110 - 118) umfaßt, mit deren Hilfe das Betriebsverhalten des Kraftfahrzeuges beeinflußt wird, wobei das Rechenelement mit Hilfe der Programmodule abhängig von wenigstens einer Eingangsgröße wenigstens eine Ausgangsgröße zur Steuerung wenigstens einer Funktion im Kraftfahrzeug erzeugt, **gekennzeichnet durch** wenigstens ein Programmodul mit mehreren Programmschritten das zur Überwachung der korrekten Funktion des Rechenelements (12) ausgewählt ist, dieses wenigstens eine ausgewählte Modul im Rechenelement (12) auf der Basis von Testdaten durchlaufen und das Ergebnis der Testdatenrechnung mit einem vorgegebenen Ergebnis zur Fehlererltennung verglichen wird und dass eine Schalteinheit vorgeschen ist, die Zeitweise Zwischen einer Zufuhr von Originaldaten und den Testdaten zum ausgewahlten Programmodul verschritten

## Claims

1. Method for monitoring a computing element (12) in a vehicle, which comprises program modules (110 - 118) which are used to influence the operational characteristics of the motor vehicle, the computing element generating, using the program modules and as a function of at least one input variable, at least one output variable for controlling at least one function in the motor vehicle, **characterized in that**, in order to monitor the correct functioning of the computing element (12), at least one program module with a plurality of program steps is selected, this at least one selected module is executed in the computing element (12) on the basis of test data, and the result of the test data computation is compared with a predefined result for the purposes of error detection and **in that** supplied original data and the test data is run through the selected program module, with switching over from time to time between supplying the original data and supplying the test data.

2. Method according to Claim 1, **characterized in that** the test is initiated by a monitoring module.

3. Method according to one of the preceding claims, **characterized in that**, in addition to the test, an execution check of the at least one selected program module is provided which constitutes an inquiry/response communication with the monitoring module and is started thereby.

4. Method according to one of the preceding claims, **characterized in that** the result which is determined by the test and/or by the execution check is compared with a respectively predefined result in the monitoring module, and when there are unacceptable deviations an error reaction is initiated by the monitoring module.

5. Method according to one of the preceding claims, **characterized in that** the computing element is used to control the drive unit of a motor vehicle, and the at least one selected program module is safety-related, preferably performance-determining, such as for example the registration of the driver's request, the idling control, the torque co-ordination, the throttle valve position control.

6. Method according to one of the preceding claims, **characterized in that** the at least one selected program module is assigned, as an original program, to a first level of the computing element (level 1) and, in the original in order to carry out the tests, to a second level of the computing element (level 1').

7. Method according to one of the preceding claims, **characterized in that** the at least one selected program module is used as an original program for the test.

8. Method according to one of the preceding claims, **characterized in that**, in addition to an instruction test which constitutes a test computation with the original program and/or an execution check, a test of at least the safety-related memory cells of the computing element (12) is carried out.

9. Method according to one of the preceding claims, **characterized in that** the computing element is used to control an automatic transmission or an engine-performance controller or an electrically controlled brake system, preferably a brake system with electromotive boosting.

10. Device for monitoring a computing element (12) in a motor vehicle, having a computing element (12), which comprises program modules (110 - 118) which are used to influence the operational characteristics of the motor vehicle, the computing element generating, using the program modules and as a function of at least one input variable, at least one output variable for controlling at least one function in the motor vehicle, **characterized by** at least one program module with a plurality of program steps which is selected to monitor the correct functioning of the computing element (12), this at least one selected module is executed in the computing element (12) on the basis of test data, and the result of the test data computation is compared with a predefined result for the purposes of error detection and in that a switching unit is provided which switches over from time to time between supplying original data and supplying the test data to the selected program module.

## Revendications

1. Procédé de contrôle d'un élément de calcul (12) de véhicule comprenant des modules de programme (110 - 118) à l'aide desquels on influence le fonctionnement du véhicule, l'élément de calcul générant au moins une grandeur de sortie pour commander au moins une fonction du véhicule à l'aide des modules de programme et en fonction d'au moins une grandeur d'entrée,
**caractérisé en ce que**
pour surveiller la fonction correcte de l'élément de calcul (12) on sélectionne au moins un module de programme à plusieurs pas de programme et ce module sélectionné effectue dans l'élément de calcul (12) des calculs en s'appuyant sur des données d'essai et compare le résultat du calcul des données d'essai à un résultat prédéfini pour détecter un défaut, et
le module de programme sélectionné est parcouru par les données d'origine appliquées et les données d'essai fixes et de temps à autre on commute entre la fourniture des données d'origine et des données d'essai.

2. Procédé selon la revendication 1,
**caractérisé en ce qu'**
un modèle de surveillance lance l'essai.

3. Procédé selon l'une des revendications précédentes,
**caractérisé en ce qu'**
à côté de l'essai, il est prévu un contrôle d'exécution d'au moins un module de programme sélectionné qui représente une communication questions/réponses avec le module de surveillance et qui est démarré par celui-ci.

4. Procédé selon l'une des revendications précédentes,
**caractérisé en ce que**
le résultat obtenu par l'essai et/ou par le contrôle d'exécution dans le module de surveillance est comparé à un résultat respectivement prédéfini et en cas de déviation inacceptable le module de surveillance lance une réaction de défaut.

5. Procédé selon l'une des revendications précédentes,
**caractérisé en ce que**
l'élément de calcul sert à commander l'unité d'entraînement d'un véhicule automobile et au moins un module de programme sélectionné concerne la sécurité et de préférence détermine la puissance comme par exemple la saisie de la demande du conducteur, la régulation de ralenti, la coordination de couple, la régulation de la position du volet d'étranglement.

6. Procédé selon l'une des revendications précédentes,
**caractérisé en ce qu'**
au moins un module de programme sélectionné est associé comme programme original à un premier plan de l'élément de calcul (plan 1) et est associé à l'original pour l'exécution de l'essai dans un second plan de l'élément de calcul (plan 1').

7. Procédé selon l'une des revendications précédentes,
**caractérisé en ce qu'**
au moins un module de programme sélectionné est utilisé comme essai pour le programme original.

8. Procédé selon l'une des revendications précédentes,
**caractérisé en ce qu'**
à côté d'un test commandé qui représente un calcul d'essai avec le programme original et/ou un contrôle d'exécution, on effectue un test d'au moins une cellule de mémoire de l'élément de calcul (12) concernant la sécurité.

9. Procédé selon l'une des revendications précédentes,
**caractérisé en ce que**
l'élément de calcul sert à commander une boite de vitesse automatique ou une gestion de puissance de moteur ou une installation de frein à commande électrique, de préférence une installation de frein à serrage par moteur électrique.

10. Dispositif de contrôle d'un élément de calcul (12) d'un véhicule automobile comprenant un élément de calcul (12) avec des modules de programme (110 - 118) à l'aide desquels on influence le fonctionnement du véhicule, l'élément de calcul générant au moins une grandeur de sortie pour commander au moins une fonction du véhicule à l'aide des modules de programme et en fonction d'au moins une grandeur d'entrée,
**caractérisé en ce qu'**
on sélectionne au moins un module de programme à plusieurs étapes de programme pour surveiller le fonctionnement correct de l'élément de calcul (12) et au moins ce module sélectionné est parcouru dans l'élément de calcul (12) par des données d'essai et le résultat du calcul des données d'essai est comparé à un résultat prédéfini pour reconnaître un défaut, et une unité de commutation commute de temps en temps entre la fourniture des données d'origine et celle des données d'essai vers le module de programme sélectionné.
